# EUROPÄISCHE PATENTSCHRIFT

(11) **EP 1 929 759 B1**
(45) Veröffentlichungstag und Bekanntmachung des Hinweises auf die Patenterteilung: **18.10.2017**
(21) Anmeldenummer: 06792979.4
(22) Anmeldetag: 24.08.2006
(51) Int. Cl.: H04M 3/54

(54) **VERFAHREN UND KOMMUNIKATIONSSYSTEM ZUM FERNGESTEUERTEN AKTIVIEREN EINES LEISTUNGSMERKMALS EINER KOMMUNIKATIONSENDEINRICHTUNG**
METHOD AND COMMUNICATION SYSTEM FOR THE REMOTE-CONTROLLED ACTIVATION OF A FUNCTION OF A COMMUNICATIONS TERMINAL
PROCEDE ET SYSTEME DE COMMUNICATIONS DESTINES A ACTIVER A DISTANCE UNE CARACTERISTIQUE DE PUISSANCE D'UN TERMINAL DE COMMUNICATIONS

(30) Priorität: 29.09.2005 DE 102005046745
(43) Veröffentlichungstag der Anmeldung: 11.06.2008
(73) Patentinhaber: Unify GmbH & Co. KG, 80807 München (DE)
(72) Erfinder: SCHAADE, Stefan, 86807 Buchloe (DE); LEDERER, Thomas, 82211 Herrsching (DE)
(74) Vertreter: Fritzsche, Thomas
(86) Internationale Anmeldenummer: PCT/EP2006/065635
(87) Internationale Veröffentlichungsnummer: WO 2007/036405

(56) Entgegenhaltungen:
- EP-A2- 0 841 797
- FR-A1- 2 796 796
- US-B1- 6 285 750

## Beschreibung

In bekannten Nebenstellen-Vermittlungsanlagen und bei bekannten Sprachendgeräten werden Leistungsmerkmale eines Sprachendgerätes häufig an dem jeweiligen Sprachendgerät konfiguriert. So wird beispielsweise zum Konfigurieren und Aktivieren einer Rufumleitung über ein Eingabefeld des Sprachendgerätes das Leistungsmerkmal "Rufumleitung" ausgewählt und eine Zielrufnummer für die Weiterleitung eingegeben. Abschließend wird die Rufumleitung an dem Sprachendgerät aktiviert und kann zu einem späteren Zeitpunkt auf analoge Weise an dem Sprachendgerät deaktiviert werden. Als Rufumleitung ist hierbei ein Leistungsmerkmal, bei dem eingehende Verbindungen zu einer konfigurierten Rufnummer als Umleitungsziel weitervermittelt werden, zu verstehen. Durch Aktivieren der Rufumleitung werden daraufhin eingehende Verbindungen an das Umleitungsziel bzw. an die Zielrufnummer um- bzw. weitergeleitet.

Weiterhin ist ein Verfahren bekannt, eine, mit einer Rufumleitung teilweise vergleichbare Funktion von einem Endgerät für ein davon verschiedenes Sprachendgerät im Rahmen eines Teleworking- oder Heim-Arbeitsplatzes zu aktivieren. Dabei wird durch Bedienschritte an einem Rechner am entfernten Arbeitsplatz eine Rufnummer eines Firmen-Sprachendgerätes einem Sprachendgerät am entfernten Arbeitsplatz zugewiesen. Daraufhin werden Anrufe zu oder von der Rufnummer über das Sprachendgerät am entfernten Arbeitsplatz durchgeführt. Der Zugriff vom Rechner am entfernten Arbeitsplatzes auf eine Firmen-Vermittlungsanlage oder auf das Firmen-Sprachendgerät kann zum Aktivieren des Verfahrens beispielsweise über eine TAPI-Schnittstelle (TAPI: Telephony Application Programming Interface) erfolgen.

Aus der US-Patentschrift US 6,285,750 B1 ist darüber hinaus bekannt, eine Aktivierung einer Rufumleitung durch einen eingehenden Anruf zu einem umzuleitenden Endgerät auszulösen. Dabei sind Rufnummern berechtigter Teilnehmer, die eine derartige Rufumleitung auslösen dürfen, in einer als "Registry" bezeichneten Registrierungseinheit angegeben.

Darüber hinaus ist aus einer weiteren Druckschrift, EP 0 841 797 A2, bekannt, dass eine Aktivierung einer Rufumleitung auch durch Übermittlung einer Kurzmitteilungsnachricht, wie sie im Rahmen von Mobilfunksystemen üblich sind, an einen Kurzmitteilungsservice eines Mobilfunknetzes und nachfolgender Weiterleitung an eine vermittlungstechnische Anlage, erfolgen kann.

Die Druckschrift FR 2 796 796 A1 betrifft einen Server zum Steuern einer Telekommunikations- und/oder Computeranlage mit einer digitalen Übertragungsverbindung zu der Anlage. Der Server kann Kurznachrichten (SMS oder UUS), die Kommandos enthalten, empfangen und interpretieren, und er kann die Kommandos durch die digitale Übertragungsverbindung an die Telekommunikations- oder Computeranlage senden.

Der vorliegenden Erfindung liegt die Aufgabe zugrunde, das Aktivieren eines Leistungsmerkmals für eine erste Kommunikationsendeinrichtung ausgehend von einer zweiten Kommunikationseinrichtung zu verbessern.

Gelöst wird diese Aufgabe durch ein Verfahren mit den Merkmalen des Patentanspruchs 1 und durch ein Kommunikationssystem mit den Merkmalen des Patentanspruchs 13.

Vorteilhafte Ausführungsformen und Weiterbildungen der Erfindung sind in den abhängigen Ansprüchen angegeben.

In dem erfindungsgemäßen Verfahren zum Aktivieren eines Leistungsmerkmals einer ersten Kommunikationsendeinrichtung, wird aufgrund einer bei der ersten Kommunikationsendeinrichtung oder bei einer der ersten Kommunikationsendeinrichtung zugeordneten Verbindungssteuerung eingehenden Übertragung eine erste, die erste Kommunikationsendeinrichtung spezifizierende Adressinformation erfasst. Weiterhin wird eine zweite, einen Sender der Übertragung spezifizierende Adressinformation erfasst und überprüft, ob für die erfasste erste Adressinformation die erfasste zweite Adressinformation zugeordnet gespeichert ist. Die Speicherung erfolgt dabei insbesondere in der ersten Kommunikationsendeinrichtung, in der Verbindungssteuerung oder einer weiteren zentralen Einrichtung. Infolge eines positiven Prüfergebnisses wird das Leistungsmerkmal aktiviert.

Die Übertragung ist insbesondere eine eingehende, vorzugsweise einen Rufaufbau initiierende Sprach- oder Multimediaverbindung oder eine eingehende Text- oder Multimedianachricht, beispielsweise eine aus dem Mobilfunk bekannte Mobilfunknachricht wie eine SMS- (SMS: Short Message System) oder MMS-Nachricht (MMS: Multimedia Messaging Service).

Die Verbindungssteuerung ist insbesondere eine Vermittlungs- oder Nebenstellenanlage, ein Gateway oder ein Gatekeeper, wobei eine Anbindung von Kommunikationsendeinrichtungen und weiteren Verbindungssteuerungen an die Verbindungssteuerung nach leitungsorientierten oder paketvermittelten Prinzipien, schnurgebunden oder schnurlos erfolgen kann.

Die erste und/oder die zweite Adressinformation ist insbesondere eine textuelle Information zu einer Rufnummer, einer MAC-Adresse, einer IP-Adresse oder einer E.164-Nummer gemäß der zugehörigen ITU-T-Empfehlung (ITU-T: Standardisierungs-Gruppe der International Telecommunication Union), wobei die erste Adressinformation vorzugsweise in Signalisierungen zu und/oder von der ersten Kommunikationsendeinrichtung und die zweite Adressinformation in Signalisierungen zu und/oder von dem Sender der Übertragung verwendet wird. Des Weiteren kann die erste und/oder die zweite Adressinformation eine der jeweiligen Kommunikationsendeinrichtung zugeordnete, identifizierende Information darstellen, die aus einer Chipkarte, beispielsweise auf einem Firmenausweis oder einer SIM-Karte (SIM: Subscriber Identification Module), einem digitalen Zertifikat oder biometrischen Daten - insbesondere ein Fingerabdruck - an der jeweiligen Kommunikationsendeinrichtung ermittelbar ist.

Weiterhin ist die erste Kommunikationsendeinrichtung insbesondere ein leitungsvermitteltes Sprachendgerät wie ein Telefon, ein paketorientiertes IP-Sprachendgerät (IP: Internet Protocol), ein Datenendgerät wie ein Faxgerät oder ein so genannter Soft-Client als eine in einer Datenverarbeitseinrichtung oder einem PDA (Personal Digital Assistant) ablaufende Telefonieanwendung. Vorzugsweise ist die erste Kommunikationsendeinrichtung Bestandteil eines Kommunikationssystems oder Nebenstellenanlage in einem Kommunikationsnetzwerk einer Firma oder Organisation. Der Sender ist eine ebensolche Kommunikationsendeinrichtung oder darüber hinaus vorzugsweise eine Kommunikationsendeinrichtung außerhalb dieses Kommunikationssystems oder -netzwerkes, insbesondere ein Mobilfunkendgerät oder Festnetzendgerät, das über eine Amtsleitung mit dem Kommunikationsnetzwerk gekoppelt ist.

Vorteilhafterweise sind der Sender ein Mobiltelefon und die erste Kommunikationsendeinrichtung ein Firmen-Telefon eines gemeinsamen Teilnehmers und diesem fest zugeordnet, so dass erfindungsgemäß durch eine Überprüfung dieser Zuordnung eine Authentifizierung des Senders durchgeführt werden kann. Diese Zuordnung kann dabei vorzugsweise über einen in bestehenden Firmennetzen häufig bereits vorhandenen Verzeichnisdienst - ein so genannter Directory-Service - mit Mitarbeiterdaten erfolgen, so dass mit der Erfindung auf eine häufig bereits bestehende Infrastruktur zugegriffen werden kann.

Das Leistungsmerkmal der ersten Kommunikationsendeinrichtung wird durch das erfindungsgemäße Verfahren insbesondere in der ersten Kommunikationsendeinrichtung, in der Verbindungssteuerung, in einer Vermittlungsanlage oder in einem Gatekeeper aktiviert. Beispiele für ein Leistungsmerkmal, das vorteilhafterweise durch das erfindungsgemäße Verfahren aktiviert werden kann, sind eine bedingte oder bedingungslose Rufumleitung auf eine Vertreter-Kommunikationsendeinrichtung oder auf eine alternative Kommunikationsendeinrichtung des Teilnehmers. Das Leistungsmerkmal ist weiterhin bespielsweise eine Anrufbeantworterfunktion der ersten Kommunikationsendeinrichtung, eine Teleworking-Funktion zum logischen Ersetzen einer firmeninternen durch eine firmenexterne Kommunikationsendeinrichtung, eine akustische Raumüberwachung durch die erste Kommunikationsendeinrichtung, eine Grundinitialisierung - d.h. ein so genannter Reset - der ersten Kommunikationsendeinrichtung, oder ein Anmelden bzw. Registrieren der ersten Kommunikationsendeinrichtung bei einer Verbindungssteuerung.

Die Adressinformationen können beispielsweise mittel CLIP (Calling Line Identification Presentation) im Rahmen der Übertragung übermittelt werden oder explizit von der ersten Kommunikationsendeinrichtung oder der Verbindungssteuerung abgefragt werden.

Die Erfindung ist insofern vorteilhaft, als dass ein Leistungsmerkmal, insbesondere eine Rufumleitung, für die erste Kommunikationsendeinrichtung durch eine weitere Kommunikationsendeinrichtung - den Sender - ausgelöst werden kann. Weiterhin ist vorteilhaft, dass die Auswertung der Zuordnung zwischen erster und zweiter Adressinformation eine explizite Authentifizierung, beispielsweise mittels Eingabe einer Zugangsnummer und eines Passworts, überflüssig macht, da nur für derartig zueinander zugeordnete Kommunikationsendeinrichtungen ein Leistungsmerkmal aktiviert werden kann. Eine Konfigurierung der Zuordnung könnte deshalb vorzugsweise für diesen Zweck lediglich über gesicherte Mechanismen änderbar sein, beispielsweise indem die Zuordnung aus einer Personaldatenbank abgeleitet wird oder manuell von einem vertrauenswürdigen Administrierungspersonal administriert wird.

Darüber hinaus ist vorteilhaft, dass die Aktivierung des Leistungsmerkmals mit wenigen und einfachen Schritten durchgeführt werden kann. Dies sind beispielsweise lediglich ein Anruf oder eine SMS-Nachricht von einem Mobiltelefon als Sender zur ersten Kommunikationsendeinrichtung.

Weiterhin ist vorteilhaft, dass die Verbindungskosten gering gehalten werden können, da lediglich die Kosten einer SMS-Nachricht oder eines kurzen Aktivierungsanrufs anfallen, wobei vorzugsweise bei dem eingehenden Anruf der eingehende Ruf von der Verbindungssteuerung nicht bis zur ersten Kommunikationsendeinrichtung durchgeschaltet wird und es somit ermöglicht wird, das erfindungsgemäße Verfahren ohne Verbindungskosten zu aktivieren.

Vorzugsweise wird nach dem Aktivieren des Leistungsmerkmals das Leistungsmerkmal für einen zeitlich nachfolgenden Verbindungsaufbau von einer weiteren Kommunikationsendeinrichtung zur ersten Kommunikationsendeinrichtung aktiviert. So wird beispielsweise durch das erfindungsgemäße Aktiveren eine Rufumleitung zu einem Mobilfunkgerät aktiviert, so dass für alle später eingehenden Anrufe von beliebigen, weiteren Kommunikationsendeinrichtungen zur ersten Kommunikationsendeinrichtung der jeweilige Anruf zu dem Mobilfunkendgerät umgeleitet wird. In diesem Beispiel wird somit die Rufumleitung für alle der Aktivierung folgenden eingehenden Verbindungen wirksam und nicht bereits für die, die Aktivierung auslösende Übertragung.

Das Leistungsmerkmal kann insbesondere dauerhaft bis zu einem späteren Deaktivieren durch eine erneute, das erfindungsgemäße Verfahren auslösende Übertragung bestehen, oder zeitlich terminiert sein.

Vorzugsweise bei einer Übertragung durch eine Text-Nachricht - beispielsweise eine SMS-Nachricht aus einem Mobilfunknetz - kann infolge des positiven Prüfergebnisses aus Nutz- und/oder Signalisierungsdaten der eingehenden Übertragung eine Steuerungsinformation zur Steuerung des Leistungsmerkmals erfasst werden. So können beispielsweise im Nutztext der SMS-Nachricht steuernde Befehle wie "aktiviere AB" zum Aktivieren einer Anrufbeantwortfunktion oder "aktiviere Rufuml: 31552" zum Einrichten einer Anrufumleitung zur angegebenen Nebenstellennummer enthalten sein. Die erste und/oder zweite Adressinformation kann ebenfalls im Nutztext enthalten sein oder aus Signalisierungsdaten der SMS-Nachricht ermittelt werden.

Ein Ausführungsbeispiel der Erfindung wird nachfolgend anhand einer Zeichnung näher erklärt.

Dabei zeigt in schematischer Darstellung die
- Figuren 1-4: ein Kommunikationssystem mit mehreren Server-Komponenten und Kommunikationsendeinrichtungen in unterschiedlichen Verfahrensschritten oder in unterschiedlichen Implementierungsvarianten des erfindungsgemäßen Verfahrens, und
- Figur 5: ein Ablaufdiagramm mit den wesentlichen Verfahrensschritten für die erfindungsgemäße Rufumleitungsaktivierung.

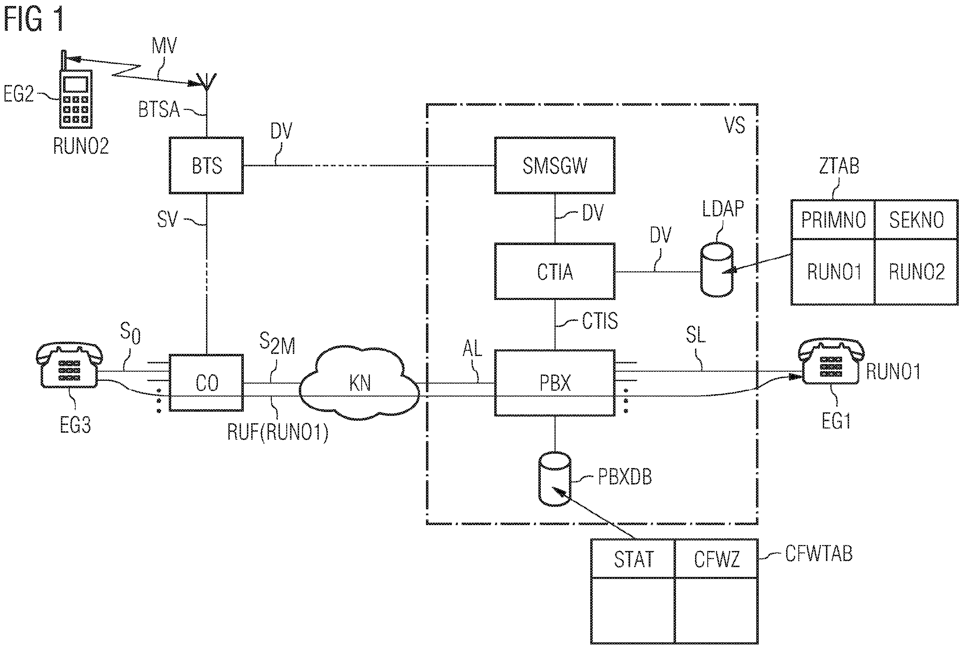

Die Figuren 1-4 zeigen in schematischer Darstellung ein Kommunikationssystem zur Sprach-Echtzeitkommunikation mit einer als Rechteck dargestellten Vermittlungsanlage PBX und einem, über eine Teilnehmeranschlussleitung SL an die Vermittlungsanlage PBX angekoppelten, ersten Telefon EG1 als erste Kommunikationsendeinrichtung. Das Kommunikationssystem stellt beispielsweise ein privates Kommunikationsnetz dar, bei dem mehrere Telefone - wie das erste Telefon EG1 - an die Vermittlungsanlage PBX anschließbar sind.

Weiterhin wird angenommen, dass die Vermittlungsanlage PBX über eine Amtsleitung AL und über eine oder über eine Kette von Verbindungssteuerungen mit einem zweiten Telefon EG2 eines Mobilfunknetzes und einem dritten Telefon EG3 eines öffentlichen Kommunikationsnetzes verbunden ist. Genauer betrachtet, ist das dritte Telefon EG3 über eine ISDN-Anschlussleitung S₀ (ISDN: Integrated Services Digital Network) an eine öffentliche Vermittlungsstelle CO gekoppelt, wobei diese wiederum über einen so genannten Primärmultiplexanschluss S_{2M} an ein Kommunikationsnetz KN und weiter über die Amtsleitung AL an die Vermittlungsanlage PBX gekoppelt ist. Das zweite Telefon EG2 - ein Mobiltelefon - kann über eine als Blitz stilisierte Mobilfunkverbindung MV mit einer Basisstation BTS über dessen Basisstation-Antenne BTSA gekoppelt werden, je nachdem in welcher Funkzelle sich das Mobiltelefon befindet.

Die Basisstation BTS ist über eine im Rahmen des Ausführungsbeispiels nicht detaillierter spezifizierte Sprachverbindungsleitung SV an die öffentliche Vermittlungsstelle CO gekoppelt. Zur Übermittlung von Text- und Multimedianachrichten von Mobilfunkendgeräten sei weiterhin vereinfacht eine Kopplung der Basisstation BTS über eine Datenverbindungsleitung DV an ein - lediglich durch eine punktierte Linie angedeutetes - Datennetz vorgesehen.

Die ISDN-Anschlussleitung S₀, der Primärmultiplexanschluss S_{2M}, die Amtsleitung AL, sowie die Mobilfunkverbindung MV zeichnen sich im vorliegenden Ausführungsbeispiel dadurch aus, dass sie über CLIP Rufnummerninformationen eines sendenden Teilnehmers übermitteln können.

Die Vermittlungsanlage PBX ist Teil einer erfindungsgemäßen, als gestricheltes Rechteck dargestellten Verbindungssteuerung VS, die weiterhin ein SMS-Gateway SMSGW, eine CTI-Applikation CTIA (CTI: Computer Telephony Integration), einen Directory-Service LDAP, sowie eine Vermittlungsanlagen-Datenbank PBXDB der Vermittlungsanlage PBX umfasst. Hierbei besitzt der SMS-Gateway SMSGW eine Kopplung über das vorstehend genannte Datennetz und die vorstehend genannte Datenverbindungsleitung DV an die Basisstation BTS, sowie eine Kopplung über eine weitere Datenverbindungsleitung DV zur CTI-Applikation CTIA. Diese ist wiederum über eine CTI-Schnittstelle CTIS an die Vermittlungsanlage PBX gekoppelt und über eine weitere Datenverbindungsleitung DV zum Directory-Service LDAP.

Das erste Telefon EG1 als erfindungsgemäße erste Kommunikationsendeinrichtung ist über die Teilnehmeranschlussleitung SL an die Vermittlungsanlage PBX gekoppelt und wird über diese gesteuert. Dem ersten Telefon EG1 ist eine erste Rufnummer RUN01 zugeordnet, dem zweiten Telefon EG2 als erfindungsgemäßer Sender eine zweite Rufnummer RUN02.

Die vorstehend genannten physikalischen Verbindungen und Leitungen sind durch durchgehende Linien dargestellt, Meldungen und logische Verbindungen - im Folgenden mit RUF, AKTRUF, SETZ, PRUEF, AKTSMS, I bezeichnet - sind durch durchgehende Linien mit Pfeilen an einem oder an beiden Enden der Linien angedeutet.

Durch die Vermittlungsanlagen-Datenbank PBXDB werden vermittlungsanlageninterne teilnehmer-, endgeräte- und/oder verbindungsbezogene Daten gespeichert. Dies ist insbesondere eine Rufumleitungstabelle CFWTAB, in der eine Zuordnung einer Endgeräteinformation STAT zu einem Rufumleitungsziel CTWZ gespeichert wird, wobei die Endgeräteinformation STAT eine, eine Kommunikationsendeinrichtung bezeichnende Information wie eine Leitungsnummer, eine Rufnummer oder eine Endgeräte-Identifikationsnummer sein kann.

Durch den Directory-Service LDAP werden teilnehmerbezogene Daten gespeichert und verwaltet, wobei die Daten des Directory-Service LDAP über eine - nicht dargestellte - LDAP-Schnittstelle (LDAP: Lightweight Directory Access Protocol) konfiguriert und/oder abgefragt werden können. Dies ist insbesondere vorteilhaft, als dass in Firmen häufig Mitarbeiterdaten wie Name, Rufnummer, Mobilfunknummer, Mitarbeiternummer, E-Mail-Adresse, usw. zentral in einer Datenbank eines Directory-Services abgelegt werden und diese Daten im Rahmen der Erfindung weiterverwendet werden können. Somit kann für die Erfindung eine ursprünglich für andere Zwecke eingerichtete Datenbank ausgelesen werden. Dies reduziert den Konfigurationsaufwand und reduziert Fehlermöglichkeiten durch inkorrekte Teilnehmer-Daten oder durch fehlerbehaftetes, manuelles Pflegen der Teilnehmer-Daten bzw. der erfindungsgemäßen Zuordnung.

Der Directory-Service LDAP umfasst insbesondere eine Zuordnungstabelle ZTAB, in der eine Zuordnung von einer Hauptrufnummer PRIMNO zu einer Zweitrufnummer SEKNO gespeichert wird. Für das vorliegende Ausführungsbeispiel ist in der Zuordnungstabelle ZTAB die erste Rufnummer RUN01 des ersten Telefons EG1 als Hauptrufnummer PRIMNO und die zweite Rufnummer RUN02 des zweiten Telefons EG2 als Zweitrufnummer SEKNO zugeordnet gespeichert. Diese Zuordnung basiert auf der beispielhaften Annahme, dass das zweite Telefon EG2 ein Mobilfunkgerät des Teilnehmers des ersten Telefons EG1 ist und das erste Telefon EG1 ein Arbeitsplatzendgerät dieses Teilnehmers ist.

Die bereits genannte Kopplung zwischen der CTI-Applikation CTIA und der Vermittlungsanlage PBX über die CTI-Schnittstelle CTIS wird insbesondere mittels des von der ECMA (European Computer Manufacturers Association) standardisierten CSTA-Protokolls (CSTA: Computer Supported Telecommunications Application) durchgeführt, über das die CTI-Applikation CTIA über die vermittlungstechnischen Zustände und Zustandswechsel der Vermittlungsanlage PBX informiert wird. Die CTI-Applikation CTIA kann auf einem eigenen Rechner, in der Vermittlungsanlage PBX oder auf einem Arbeitsplatzrechner realisiert werden.

Die Vermittlungsanlage PBX und das erste Telefone EG1 sowie das dritte Telefon EG3 sind zur leitungsvermittelten Echtzeitkommunikation für Sprache vorgesehen, das zweite Telefon EG2 unterstützt weiterhin eine Nicht-Echtzeitkommunikation für Daten über SMS-Text-Nachrichten.

Alternativ zu dem dargestellten ersten Telefon EG1 als Festnetztelefon kann diese darüber hinaus als eine auf einem Arbeitsplatzrechner ablaufende Telefonapplikation - ein so genannter Soft-Client - oder als eine mobile Kommunikationsendeinrichtung ausgestaltet sein. Die Vermittlungsanlage PBX kann weiterhin alternativ zur dargestellten Ausführungsform auf paketorientierten Prinzipien basieren, wobei eine paketorientierte Vermittlungsanlage PBX oder auch ein Gatekeeper, Gateway oder Kommunikationsserver ins Kommunikationsssystem integriert werden kann.

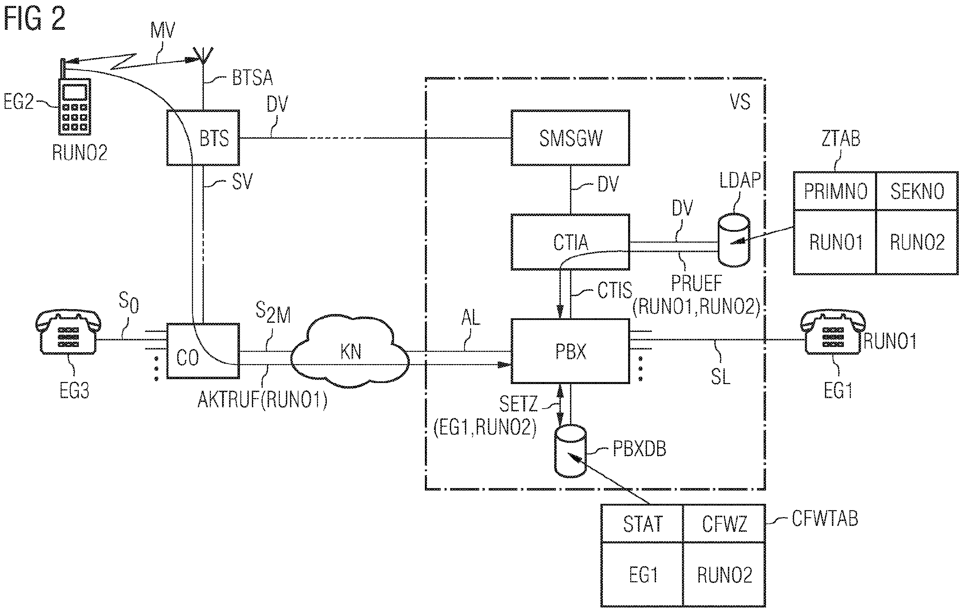

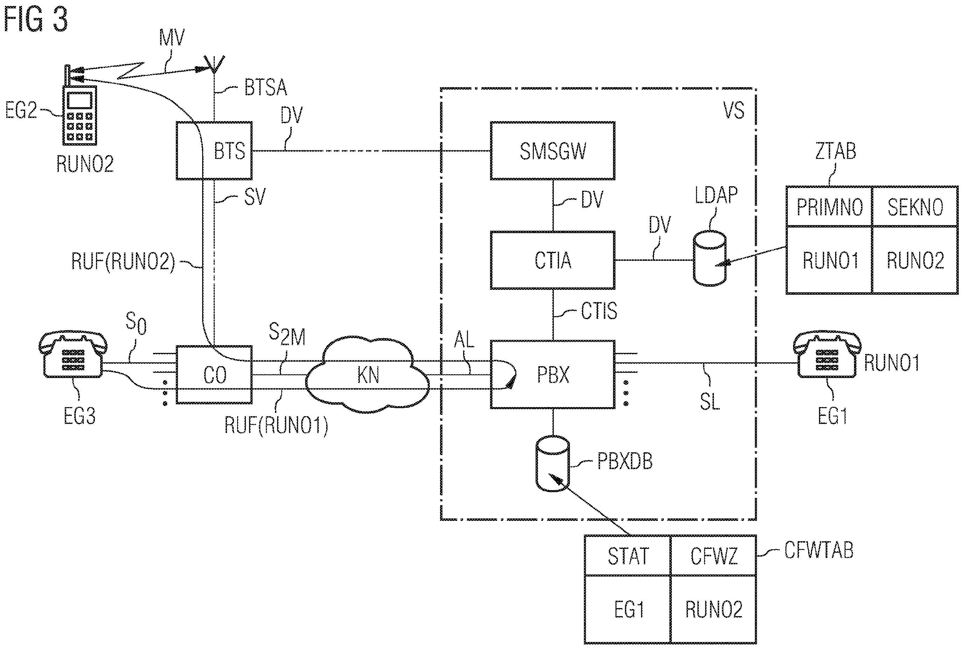

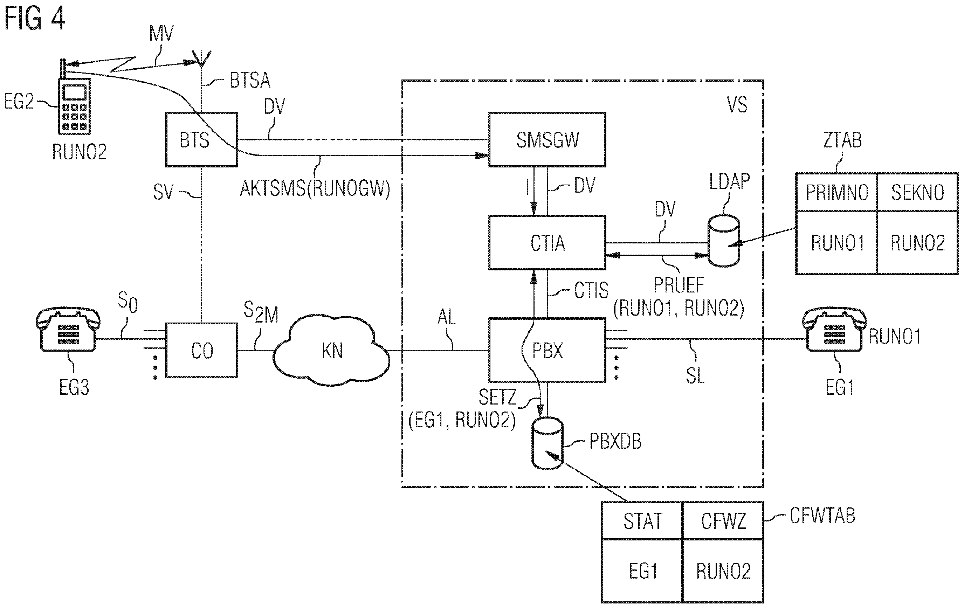

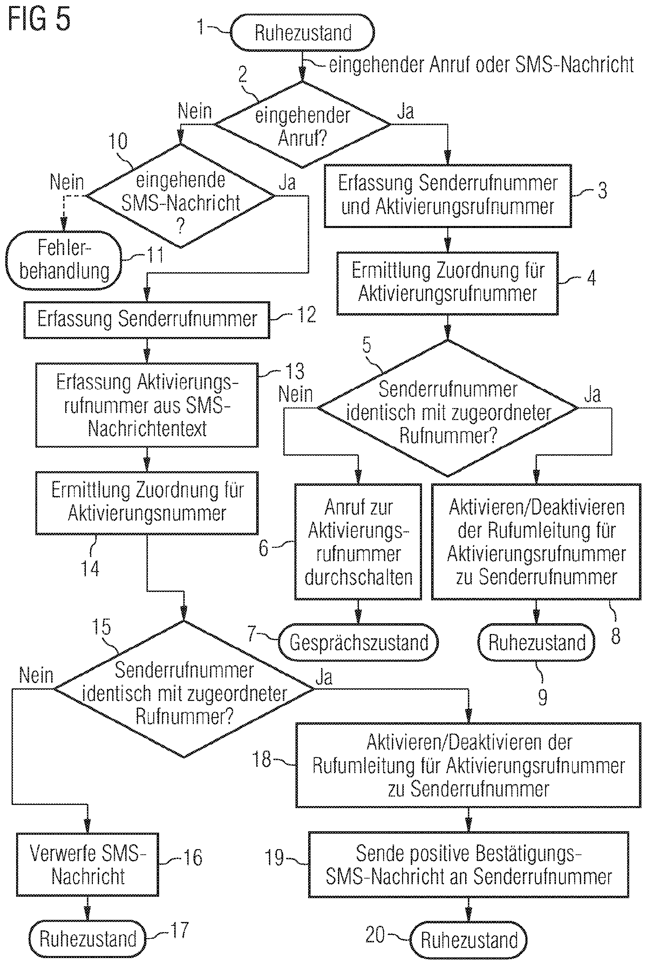

In Figur 1 ist eine Ausgangssituation für die Figuren 2 und 4 mit einer Konfiguration vor Initiierung des erfindungsgemäßen Verfahrens dargestellt, wobei die Zuordnungstabelle ZTAB mit dem erwähnten Datensatz für die erste Rufnummer RUN01 bereits für die Ausführung einer erfindungsgemäßen Aktivierung einer Rufumleitung als Leitungsmerkmal konfiguriert ist. Die Figuren 2 und 4 zeigen zwei alternative Ausgestaltungen für die erfindungsgemäße Aktivierung der Rufumleitung und Figur 3 zeigt einen Rufaufbau nach einer derartigen Aktivierung. Im Folgenden werden die Verfahrensschritte anhand der Figuren 1 bis 4 erläutert, wobei teilweise auf das Ablaufdiagramm von Figur 5 für die Verbindungssteuerung VS Bezug genommen wird.

Ausgehend von einem Ruhezustand der Verbindungssteuerung VS (Zustand 1 in Figur 5) erfolgt in Figur 1 eine Rufaufbausignalisierung RUF ausgehend vom dritten Telefon EG3 über die öffentliche Vermittlungsstelle CO zur Vermittlungsanlage PBX mit der Anforderung, eine Verbindung zur ersten Rufnummer RUNO1 aufzubauen (Zustand 2 in Figur 5). Die Rufnummer des sendenden dritten Telefons EG3 wird dabei mittels CLIP im Rahmen der Rufaufbausignalisierung RUF an die Vermittlungsanlage PBX übermittelt. Diese erfasst diese Information (Zustände 3 und 4 in Figur 5) und initiiert mit dieser eine Prüfung, ob für die adressierte erste Rufnummer RUNO1 ein Eintrag in der Zuordnungstabelle ZTAB mit einer Zuordnung zur Rufnummer des dritten Telefons EG3 existiert (in Figur 1 nicht dargestellt; Zustand 5 in Figur 5). Diese Prüfung liefert im vorliegenden Ausführungsbeispiel in diesem Verfahrensschritt ein negatives Prüfergebnis. Daraufhin wird ein Aktivieren eines Leistungsmerkmals - was im Übrigen auch gar nicht erwünscht wäre - gemäß des erfindungsgemäßen Verfahrens abgelehnt.

Weiterhin wird - wie in bekannten Vermittlungsanlage üblich - durch die Vermittlungsanlage PBX die Rufumleitungstabelle CFWTAB für das angesprochene Rufziel RUNO1 abgefragt - nicht dargestellt -, wobei die Tabelle in diesem Verfahrensschritt leer ist und somit ein negatives Prüfergebnis liefert. Durch dieses negative Prüfergebnis wird erkannt, dass keine Rufumleitung benötigt wird. Daraufhin signalisiert die Vermittlungsanlage PBX dem ersten Telefon EG1 den eingehenden Ruf mittels der Rufaufbausignalisierung RUF (Zustände 6 und 7 in Figur 5).

In Figur 2 ist ausgehend von der in Figur 1 dargestellten Konfigurierung eine Aktivierung einer Rufumleitung vom ersten Telefon EG1 zum zweiten Telefon EG2 ausgelöst durch das zweite Telefon EG2 veranschaulicht. Hierzu wird über das zweite Telefon EG2 ein Anruf zum ersten Telefon EG1 mit einer Adressierung an die ersten Rufnummer RUN01 initiiert. Eine Rufaufbausignalisierung AKTRUF zur Aktivierung der Rufumleitung als erfindungsgemäße Übertragung wird dabei vom zweiten Telefon EG2 über die Mobilfunkverbindung MV, die Basisstation BTS, die öffentliche Vermittlungsstelle CO und dem Kommunikationsnetz KN zur Vermittlungsanlage PBX und somit zur Verbindungssteuerung VS geleitet (Zustand 2 in Figur 5). Durch die Vermittlungsanlage PBX wird die signalisierte erste Rufnummer RUN01 des gerufenen ersten Telefons EG1 und die mittels CLIP im Rahmen der Rufaufbausignalisierung AKTRUF übermittelte zweite Rufnummer RUN02 des Senders erfasst (Zustände 3 und 4 in Figur 5).

Sollte ein Signalisieren der Senderrufnummer nicht im Rahmen der Rufaufbausignalisierung AKTRUF erfolgen oder nicht möglich sein, so kann alternativ durch die Vermittlungsanlage PBX in einer Rücksignalisierung zum zweiten Telefon EG2 die Senderrufnummer explizit abgefragt werden.

Die CTI-Applikation CTIA überwacht die Vermittlungsanlage PBX bezüglich Zustandswechsel und eingehender Events. Bei einem eingehenden Ruf wie der Rufaufbausignalisierung AKTRUF wird von der Vermittlungsanlage PBX die erfassten, rufbezogenen Daten wie die erste und die zweite Rufnummer RUN01, RUN02 über die CTI-Schnittstelle CTIS zur CTI-Applikation CTIA übertragen. Die CTI-Applikation CTIA empfängt und erfasst diese übermittelten Daten und setzt eine Abfrage beim Directory-Service LDAP ab, ob im Directory-Service LDAP ein Datensatz in der Zuordnungstabelle ZTAB für die erste Rufnummer RUN01 existiert und ob in diesem eine Zuordnung von der ersten Rufnummer RUN01 zur zweiten Rufnummer RUN02 gespeichert ist (Zustand 5 in Figur 5).

Im vorliegenden Ausführungsbeispiel ist dies der Fall. Dies wird der CTI-Applikation CTIA und weiter der Vermittlungsanlage PBX in einer positiven Quittung zur Übermittlung des positiven Prüfergebnisses bekannt gegeben. Würde dagegen, entgegen dem vorliegenden Ausführungsbeispiel, entweder kein Eintrag in der Zuordnungstabelle ZTAB für die erste Rufnummer RUN01 gefunden werden, oder es würden zwar ein oder mehrere Einträge gefunden werden, doch keiner der Einträge wurde eine Zuordnung zur zweiten Rufnummer RUN02 aufweisen, so würde eine negative Quittung an die Vermittlungsanlage PBX signalisiert werden.

In Figur 2 ist die vorstehend ausgeführte Kommunikation zwischen der Vermittlungsanlage PBX, der CTI-Applikation CTIA und dem Directory-Service LDAP durch eine Abfrageverbindung PRUEF als Doppelpfeil zwischen der Vermittlungsanlage PBX und dem Directory-Service LDAP visualisiert, wobei die Abfrageverbindung PRUEF über die CTI-Applikation CTIA aufgebaut wird.

Aufgrund des positiven Prüfergebnisses bezüglich der Zuordnung von der zweiten Rufnummer RUN02 zur ersten Rufnummer RUN01 in der Zuordnungstabelle ZTAB wird, initiiert durch die CTI-Applikation CTIA oder durch die Vermittlungsanlage PBX, eine Rufumleitung des ersten Telefons EG1 zur zweiten Rufnummer RUN02 aktiviert (Zustand 8 in Figur 5). Das entsprechende Leistungsmerkmal wird in der Vermittlungsanlage PBX gesetzt und in der Vermittlungsanlagendatenbank PBXDB konfiguriert. Letzteres ist durch eine Übermittlung SETZ in Figur 2 veranschaulicht, in der eine Information der betroffenen Endeinrichtung - hier das erste Telefon EG1 - und eine Zielrufnummer-Information - hier die zweite Rufnummer RUN02 - zur Vermittlungsanlagendatenbank PBXDB transferiert wird und dort in der Rufumleitungstabelle CFWTAB zueinander zugeordnet gespeichert wird.

Daraufhin wird durch die Vermittlungsanlage PBX oder durch die CTI-Applikation CTIA der Rufaufbau abgebrochen bzw. beendet. Dies wird dem rufenden, zweiten Telefon EG2 durch eine Ansage oder lediglich durch einen bekannten Rufton, beispielsweise ein Besetztzeichen, akustisch signalisiert.

In keinem der vorgenannten Verfahrensschritte wird dem ersten Telefon EG1 signalisiert, dass ein eingehender Ruf ansteht. Jegliche Signalisierung zum ersten Telefon EG1 wird unterdrückt. Alternativ kann als Quittung auch am ersten Telefon EG1 eine Ansage oder ein Klingelton ausgelöst werden, um das Aktivieren der Rufumleitung am ersten Telefon EG1 bekanntzugeben.

Abschließend kann die Verbindungssteuerung VS und insbesondere die Vermittlungsanlage PBX in einen Ruhezustand übergehen (Zustand 9 in Figur 5). Zeitlich folgende Anrufe zum ersten Telefon EG1 werden von der Vermittlungsanlage PBX durch Auswertung der Rufumleitungstabelle CFWTAB an das dort gespeicherte Rufumleitungsziel CFWZ, also an die zweite Rufnummer RUN02 und somit an das zweite Telefon EG2 signalisiert. Dies wird beispielhaft in Figur 3 verdeutlicht.

Das vorgestellte Verfahren ist insofern vorteilhaft, als dass ohne weitere Authentifizierung oder Zertifizierung eine Rufumleitung oder ein anderes Leistungsmerkmal für eine registrierte Kommunikationsendeinrichtung lediglich für eine weitere, vorab zu dieser Kommunikationsendeinrichtung registrierte Kommunikationsendeinrichtung initiiert werden kann.

Dies ist insbesondere für ein häufig vorkommendes Problem vorteilhaft, wenn ein Mitarbeiter einer Firma seinen Firmenarbeitsplatz verlassen hat und vergessen hat Telefonanrufe, die während seiner Abwesenheit eingehen, auf sein Mobilfunkendgerät umzuleiten. Nun kann der Mitarbeiter, bei entsprechender Konfiguration der Vermittlungsanlage PBX, lediglich durch einen Anruf von seinem Mobilfunkendgerät zu seinem Firmen-Endgerät eine entsprechende Rufumleitung aktivieren. Ihm wird somit eine einfache und gleichzeitig manipulationssichere Art der Aktivierung der Rufumleitung auf sein Mobilfunkendgerät bereitgestellt.

Weiterhin ist vorteilhaft, dass das Aktivieren der Rufumleitung gebührenfrei erfolgen kann, da im erfindungsgemäßen Verfahren eine Rufannahme der, die Aktivierung auslösenden Übertragung nicht vorgesehen ist.

Insbesondere falls aus mehreren verfügbaren Leistungsmerkmalen eines durch den, eine Aktivierungsübertragung auslösenden Teilnehmer ausgewählt werden soll, kann es vorteilhaft sein, dem auslösenden Teilnehmer eine Leistungsmerkmal-Auswahlmöglichkeit anzubieten. Dies kann beispielsweise durch Integration eines Ansagedienstes mit einer Tasten- oder Sprachsteuerung erfolgen. Dieser Ansagedienst kann dem anrufenden Teilnehmer die zur Verfügung stehenden Leistungsmerkmale akustisch zur Auswahl anbieten. Der Teilnehmer kann daraufhin, je nach Ausgestaltung mittels Tastendruck oder mittels Spracheingabe das Leistungsmerkmal auswählen, dass daraufhin durch die Verbindungssteuerung aktiviert wird.

Weiterhin kann alternativ eine gesonderte Rufnummer als Zugangsnummer in der Vermittlungsanlage PBX ausgewiesen werden, die für die Aktivierung von Leistungsmerkmalen verwendet werden kann. Eine Rufnummer, die ein Endgerät spezifiziert, für das das Leistungsmerkmal aktiviert werden soll, kann dann entweder über einen Ansagedienst - wie vorstehend beschrieben - oder durch Extrahieren aus angehängten Rufnummer-Ziffern an die Zugangsnummer ermittelt werden. Diese alternative Ausprägung erweist sich als vorteilhaft, da lediglich eine Rufnummer, die Zugangsnummer, bezüglich eingehender Anrufe überwacht werden muss.

Des Weiteren wird vorteilhafterweise durch ein erneutes Aufbauen einer Aktivierungsverbindung vom zweiten Telefon EG2 zum ersten Telefon EG1 ein Ausschalten der Rufumleitung und Umschalten in den vorher eingenommenen Grundzustand bewirkt. Somit wird durch die Aktivierungsübertragung ein Umschalten zwischen einem aktiven und einem inaktiven Zustand des Leistungsmerkmals bewirkt.

In Figur 3 ist im Folgenden ein Verbindungsversuch von einem dritten Telefon EG3 zum ersten Telefon EG1 dargestellt, wobei das Rufumleitungs-Leistungsmerkmal zum zweiten Telefon EG2 aktiviert ist. Durch Wählen der ersten Rufnummer RUN01 am dritten Telefon EG3 wird eine Rufaufbausignalisierung RUF vom dritten Telefon EG3 über die öffentliche Vermittlungsstelle CO und dem Kommunikationsnetz KN zur Vermittlungsanlage PBX aufgebaut. In der Vermittlungsanlage PBX wird als erstes ein Eintrag in der Zuordnungstabelle ZTAB für die erste Rufnummer RUN01 als Zielrufnummer des Anrufs und die Rufnummer des dritten Telefons EG3 abgefragt - nicht dargestellt. Diese Abfrage wird im vorliegenden Ausführungsbeispiel negativ quittiert. Daraufhin bearbeitet die Vermittlungsanlage PBX den eingehenden Anruf nach bekannten Mechanismen ab und überprüft insbesondere mittels der Rufumleitungstabelle CFWTAB, ob für das zu rufende, erste Telefon EG1 ein Eintrag vorhanden ist. Dies ist im vorliegenden Ausführungsbeispiel der Fall. Es wird das Ziel der Rufumleitung aus der Rufumleitungstabelle CFWTAB ausgelesen - hier die zweite Rufnummer RUN02 - und daraufhin die Rufaufbausignalisierung RUF zu diesem Ziel weitergeleitet.

Somit wird von der Vermittlungsanlage PBX die Rufaufbausignalisierung RUF mit neuer Zielrufnummer - die zweite Rufnummer RUN02 - als Verbindungsziel über das Kommunikationsnetz KN, der öffentlichen Vermittlungsstelle CO, der Basisstation BTS und der Mobilfunkverbindung MV zum zweiten Telefon EG2 übermittelt. Infolgedessen wird am zweiten Telefon EG2 ein eingehender Ruf optisch und akustisch signalisiert und bei Rufannahme durchgeschaltet.

In Figur 4 wird eine zu Figur 2 alternative Leistungsmerkmalaktivierung veranschaulicht, indem eine SMS-Nachricht als Text-Nachricht für die erfindungsgemäße Übertragung zur Aktivierung des Leistungsmerkmals verwendet wird. Hierzu wird am zweiten Telefon EG2 eine SMS-Nachricht eingegeben oder eine vorbereitete SMS-Nachricht aus einem Speicher des zweiten Telefons EG2 abgefragt und an die Basisstation BTS abgesetzt. Die SMS-Nachricht umfasst im vorliegenden Ausführungsbeispiel einen Text "AKT RUFUML: RUN01" als Nutzdaten und somit als Steuerungsinformation zur Steuerung der Leistungsmerkmalaktivierung, wobei "AKT" und "RUFUML" Schlüsselwörter für ein Aktivieren einer Rufumleitung und RUN01 die erste Rufnummer RUN01 des ersten Telefons EG1 darstellen.

Durch die Basisstation BTS wird die SMS-Nachricht als Aktivierungsnachricht AKTSMS über einen nicht weiter spezifizierten Verbindungspfad zum SMS-Gateway SMSGW der Verbindungssteuerung VS geleitet (Zustand 10 in Figur 5). Adressiert wird dieser SMS-Gateway SMSGW als Nachrichten-Zentrale über eine zentrale Gateway-Rufnummer RUNOGW. Infolge des Eintreffens der Aktivierungsnachricht AKTSMS wird aus dem Nutzdatentext das gewünschte Leistungsmerkmal - Rufumleitung -, die gewünschte Aktion - Aktivieren - und die Rufnummer der Kommunikationsendeinrichtung, für die das Leistungsmerkmal zu aktivieren ist - RUNO1 -, ermittelt. Weiterhin wird aus Signalisierungsdaten der Aktivierungsnachricht AKTSMS die Rufnummer RUN02 des sendenden, zweiten Telefons EG2 ermittelt und erfasst (Zustände 12 und 13 in Figur 5).

Darauf zeitlich folgend wird vom SMS-Gateway SMSGW eine Auslösemeldung I mit den genannten Informationen zur CTI-Applikation CTIA übermittelt. Durch diesen wird eine Abfrageverbindung PRUEF zum Ermitteln, ob für die erfasste, erste und zweite Rufnummer RUN01, RUN02 ein gemeinsamer Eintrag in der Zuordnungstabelle ZTAB des Directory-Services LDAP existiert, aufgebaut (Zustände 14 und 15 in Figur 5). Im vorliegenden Ausführungsbeispiel ist dies der Fall, was der CTI-Applikation CTIA durch eine positive Quittung vom Directory-Services LDAP als Bestätigung des Vorhandenseins einer Zuordnung zwischen der ersten und der zweiten Rufnummer RUN01, RUN02 mitgeteilt wird.

Bei negativer Quittung würde die Verbindungssteuerung VS lediglich die eingegangene SMS-Nachricht verwerfen (Zustand 16 in Figur 5) und in einen Ruhezustand übergehen (Zustand 17 in Figur 5).

Infolge der positiven Quittung wird die Vermittlungsanlage PBX durch die CTI-Applikation CTIA angewiesen, gemäß der erfassten Informationen eine Rufumleitung vom ersten Telefon EG1 zur zweiten Rufnummer RUN02 des, die Rufumleitung initiierenden, zweiten Telefons EG2 einzurichten und zu aktivieren - nicht dargestellt. Alternativ dazu und in Figur 4 dargestellt kann die CTI-Applikation CTIA einen direkten Zugriff auf die, die Leistungsmerkmale steuernde Vermittlungsanlagendatenbank PBXDB besitzen. Hierzu werden mit der Übermittlung SETZ die erfassten Informationen in die Rufumleitungstabelle CFWTAB übertragen. Somit wird in dieser Tabelle eine Rufumleitung vom ersten Telefon EG1 zur zweiten Rufnummer RUN02 aktiviert (Zustand 18 in Figur 5).

Optional kann daraufhin durch die CTI-Applikation CTIA der SMS-Gateway SMSGW angestoßen werden, eine Bestätigungs-SMS-Nachricht an die zweite Rufnummer RUN02 auszusenden (Zustand 19 in Figur 5). Dieser Schritt beendet die Aktivierung des Leistungsmerkmals "Rufumleitung". Die Verbindungssteuerung VS kann in einen Ruhezustand übergehen (Zustand 20 in Figur 5).

Durch die anhand Figur 4 veranschaulichten Verfahrensschritte ist eine der Figur 3 entsprechende Konfiguration eingetreten, in der ein Rufbau von einer weiteren Kommunikationsendeinrichtung wie dem dritten Telefon EG3 zum ersten Telefon EG1 durch die Vermittlungsanlage PBX zum zweiten Telefon EG2 weitergeleitet wird.

Die Aktivierung mittels einer Text-Nachricht ist dabei insofern vorteilhaft, als dass für die Textnachricht eine Kommandosyntax mit vorgegebenen Schlüsselwörtern definiert werden kann, die eine große Anzahl verschiedener Leistungsmerkmale aktivieren oder deaktivieren lässt. So kann beispielsweise über einen Nutzdatentext "AKT RUFUML: RUN01 TO RUNOx" eine Rufumleitung für das ersten Telefon EG1 mit der ersten Rufnummer RUN01 zu einer beliebigen Rufnummer RUNOx aktiviert werden. Weiterhin kann beispielsweise mittels einem Nutzdatentext "DEAKT AB: RUN01" eine Anrufbeantworterfunktion für das erste Telefon EG1 deaktiviert werden. Damit ergibt sich ein sehr einfach zu erweiterndes Verfahren zur Aktivierung von Leistungsmerkmalen.

Trotz dieser Flexibilität ist aber weiterhin durch die Abfrage bei der Zuordnungstabelle ZTAB implizit eine Authorisierungsprüfung vorhanden, so dass ein Leistungsmerkmal nicht von einer, einer unberechtigten Person zugeordneten Endeinrichtung aktiviert werden kann.

Um erhöhte Sicherheitsanforderungen zu erfüllen kann vorgesehen sein, dass in einer Grundkonfiguration einer Verbindungssteuerung VS kein Leistungsmerkmal auf die beschriebene Weise über eine eingehende SMS-Nachricht von einer entfernten Kommunikationsendeinrichtung aktivierbar ist. Erst nachdem eine Freigabe-SMS-Nachricht übermittelt wird, beispielsweise mit dem Schlüsselwort "Freigabe" und/oder einem Freischaltcode als Nutzdaten, wird das erfindungsgemäße Verfahren zur Aktivierung von Leistungsmerkmalen von der Verbindungssteuerung freigegeben. Alternativ kann das Verfahren dergestalt erweitert werden, dass am ersten Telefon EG1 durch Eingabe eines Codes oder Auswahl einer Funktion eine Fernaktivierung von Leistungsmerkmalen gesperrt oder freigegeben werden kann.

Weiterhin sei angemerkt, dass die Aktivierung mittels einer SMS-Nachricht auch dergestalt verallgemeinert werden kann, dass die Aktivierung gesteuert von einem Arbeitsplatzrechner oder einem PDA durchgeführt werden kann, wobei eine Kopplung des Rechners oder des PDAs an ein Netzwerk über eine Funkverbindung oder eine Kabelverbindung erfolgen kann. Die Übermittlung zur Verbindungssteuerung VS kann dabei beispielsweise über ein paketvermitteltes Datennetz wie dem Internet durchgeführt werden.

Bei der Verwendung einer SMS-Nachricht erweist sich weiterhin als vorteilhaft, dass lediglich geringe Übermittlungskosten anfallen. Alternativ zu dem dargestellten Ausführungsbeispiel kann im SMS-Gateway SMSGW nicht lediglich eine Gateway-Rufnummer RUNOGW als Zieladresse für die Aktivierungs-SMS-Nachricht vorgesehen sein, sondern für jede, durch die Verbindungssteuerung VS verwaltete Kommunikationsendeinrichtung eine eigene SMS-Zugangsnummer vorgesehen sein, die der jeweiligen Telefonnummer der Kommunikationsendeinrichtung entspricht. So könnte beispielsweise die Aktivierungs-SMS-Nachricht an die erste Rufnummer RUN01 adressiert sein, und durch ein Zusammenwirken vom SMS-Gateway SMSGW und der Vermittlungsanlage PBX verarbeitet werden.

Alternativ zu einer SMS-Text-Nachricht kann auch eine Multimedianachricht wie eine MMS für die Aktivierung eines Leistungsmerkmals verwendet werden, wobei die Steuerung neben Text auch mittels übermittelter Grafik, Töne und/oder Sprache durchgeführt werden kann, wobei möglicherweise in der Verbindungssteuerung VS eine Sprach-, Ton, und/oder Grafikanalyse eingesetzt werden kann.

Bei den im Rahmen der Zeichnung vorgestellten Verfahren ist vorteilhaft, dass keine Benutzerführung und/oder eine Eingabe eines Passwortes nötig ist, aber beides leicht in das Verfahren integrierbar ist, sofern dies in einer Implementierungsvariante als vorteilhaft angesehen wird. Des Weiteren stellt sich die Manipulationssicherheit des Verfahrens, sofern die Sender-Rufnummer mittels CLIP übermittelt werden und die Administrierung der Zuordnungstabelle ZTAB geschützt ist oder aus zentralen Mitarbeiterdatenbank abgeleitet wird, als ein wesentlicher Vorteil der Erfindung dar.

Vorteilhafterweise kann in einer Erweiterung in einem Datensatz in der Zuordnungstabelle ZTAB zusätzlich eine Zeitinformation zugeordnet werden - insbesondere ein Datum und/oder eine Uhrzeit der Aktivierung - und im Rahmen der Überprüfung der Zuordnung in der Zuordnungstabelle diese Zeitinformation mit einer Referenzzeitinformation verglichen werden. Somit kann ermöglicht werden, dass ein Leistungsmerkmal nur für einen bestimmten Zeitraum zur Verfügung gestellt werden kann. Darüber hinaus kann die Zuordnungstabelle ZTAB alternativ zur dargestellten Ausführungsform in einem zentralen Speicher oder in der Vermittlungsanlagendatenbank PBXDB des Kommunikationssystems gespeichert werden.

Während die Erfindung im Ausführungsbeispiel anhand von Sprachendgeräten erläutert wurde, kann es sich bei der Kommunikationsendeinrichtungen auch um eine Video- oder Multimediaendeinrichtungen oder um Datenendeinrichtungen wie Faxgeräte handeln. Weiterhin kann es sich beim ersten Telefon EG1 um eine Software-Telefonieanwendung auf einem Arbeitsplatzrechner oder um ein PDA handeln. Weiterhin kann als Kommunikationsverfahren ein leitungsvermitteltes oder ein paketorientiertes Verfahren eingesetzt werden und können die Telefone EG1, EG2, EG3 leitungsvermittelte oder paketorientierte, kabelgebundene oder mobile Endgeräte sein.

Das das Verfahren auslösende zweite Telefon EG2 kann allgemein betrachtet an ein öffentliches oder privates Kommunikationsnetz, ein Mobilfunknetz, ein ISDN-Netz, ein öffentliches oder privates Datennetz oder ein Funk-Datennetz gekoppelt sein, sofern dieses eine Verbindung vom zweiten Telefon EG2 zum ersten Telefon EG1 ermöglicht.

## Patentansprüche

1. Verfahren zum Aktivieren eines Leistungsmerkmals einer ersten Kommunikationsendeinrichtung (EG1), **dadurch gekennzeichnet, dass**
a. aufgrund einer bei der ersten Kommunikationsendeinrichtung (EG1) oder bei einer der ersten Kommunikationsendeinrichtung (EG1) zugeordneten Verbindungssteuerung (VS) eingehenden Text- oder Multimedianachricht (AKTSMS) von einem als Kommunikationsendgerät ausgeführten Sender (EG2) aus der eingehenden Text- oder Multimedianachricht (AKTSMS)
- eine erste, die erste Kommunikationsendeinrichtung (EG1) spezifizierende Adressinformation (RUN01) erfasst wird, die einer Zieladresse (RUNOGW) für die Text- oder Multimedianachricht (AKTSMS) entspricht, wobei die erste Kommunikationsendeinrichtung (EG1) einen Empfänger der Text- oder Multimedianachricht (AKTSMS) darstellt und der Empfänger der Text- oder Multimedianachricht (AKTSMS) durch Adressieren mit der ersten Adressinformation (RUNO1) angesprochen wird, die in Signalisierungen zu und/oder von der ersten Kommunikationsendeinrichtung (EG1) verwendet wird,
- eine zweite, den Sender (EG2) der Text- oder Multimedianachricht (AKTSMS) spezifizierende Adressinformation (RUN02) erfasst wird, die in Signalisierungen zu und/oder von dem Sender (EG2) verwendet wird,
b. eine Authentifizierung des Senders (EG2) durchgeführt wird, indem überprüft wird, ob für die erfasste erste Adressinformation (RUN01) die erfasste zweite Adressinformation (RUN02) zugeordnet gespeichert ist, und
c. infolge eines positiven Prüfergebnisses das Leistungsmerkmal aktiviert wird.

2. Verfahren nach Anspruch 1, bei dem
ein Nutzdatentext der eingehenden Text- oder Multimedianachricht (AKTSMS) eine Kommandosyntax mit vorgegebenen Schlüsselwörtern zur Aktivierung oder Deaktivierung verschiedener Leistungsmerkmale umfasst.

3. Verfahren nach Anspruch 1 oder 2, bei dem
die Text- oder Multimedianachricht (AKTSMS) eine SMS-Nachricht ist, deren Zieladresse in einem SMS-Gateway (SMSGW) vorgesehen ist.

4. Verfahren nach einem der vorhergehenden Ansprüche, bei dem für die Text- oder Multimedianachricht (AKTSMS) die erste (RUNO1) und/oder die zweite (RUN02) Adressinformation in einer Nachrichten-Zentrale (SMSGW) erfasst werden und dass das Aktivieren des Leistungsmerkmals in der ersten Kommunikationsendeinrichtung (EG1) oder in der Verbindungssteuerung (VS) durch die Nachrichten-Zentrale (SMSGW) aufgrund der eingehenden Text- oder Multimedianachricht (AKTSMS) ausgelöst wird.

5. Verfahren nach einem der vorhergehenden Ansprüche, bei dem infolge des positiven Prüfergebnisses aus Nutz- und/oder Signalisierungsdaten der eingehenden Text- oder Multimedianachricht (AKTSMS) eine Steuerungsinformation zur Steuerung des Leistungsmerkmals erfasst wird.

6. Verfahren nach einem der vorhergehenden Ansprüche, bei dem
die Verbindungssteuerung (VS) eine Vermittlungsanlage (PBX), eine CTI-Applikation (CTIA) und ein Gateway (SMSGW) umfasst, wobei das Gateway (SMSGW) eine Kopplung über eine Datenverbindungsleitung (DV) zu der CTI-Applikation (CTIA) aufweist, die über eine CTI-Schnittstelle (CTIS) an die Vermittlungsanlage (PBX) angekoppelt ist.

7. Verfahren nach einem der vorhergehenden Ansprüche, bei dem infolge des positiven Prüfergebnisses eine akustische und/oder visuelle Anzeige für eine eingehende Text- oder Multimedianachricht (AKTSMS) an der ersten Kommunikationsendeinrichtung (EG1) durch die erste Kommunikationsendeinrichtung (EG1) oder durch die Verbindungssteuerung (VS) unterdrückt wird.

8. Verfahren nach einem der vorhergehenden Ansprüche, bei dem das Leistungsmerkmal als
- eine Anrufbeantworterfunktion der ersten Kommunikationsendeinrichtung (EG1),
- eine Teleworking-Funktion zum logischen Ersetzen einer firmeninternen durch eine firmenexterne Kommunikationsendeinrichtung,
- eine akustische Raumüberwachung durch die erste Kommunikationsendeinrichtung (EG1),
- eine Grundinitialisierung der ersten Kommunikationsendeinrichtung (EG1),
- ein Anmelden oder Registrieren der ersten Kommunikationsendeinrichtung (EG1) bei der Verbindungssteuerung (VS), oder als
- eine Rufumleitung ausgestaltet ist.

9. Verfahren nach Anspruch 8, bei dem
nach Aktivieren der Rufumleitung eine an die erste Kommunikationsendeinrichtung (EG1) adressierte Verbindung (RUF) mittels Adressieren an die zweite Adressinformation (RUN02) an eine durch die zweite Adressinformation (RUN02) spezifizierte weitere Kommunikationsendeinrichtung (EG2) umgeleitet wird.

10. Verfahren nach Anspruch 8, bei dem
infolge des positiven Prüfergebnisses eine mittels der Text- oder Multimedianachricht (AKTSMS) übermittelte Ziel-Rufnummer für die Rufumleitung erfasst wird und die Rufumleitung zu dieser Ziel-Rufnummer aktiviert wird.

11. Verfahren nach einem der vorhergehenden Ansprüche, bei dem
die zweite Adressinformation (RUN02) im Rahmen der Text- oder Multimedianachricht (AKTSMS) übermittelt wird oder dass in Fällen, in denen die zweite Adressinformation (RUN02) nicht im Rahmen der Text- oder Multimedianachricht (AKTSMS) übermittelt wird, die zweiten Adressinformation (RUN02) beim Sender (EG2) der Text- oder Multimedianachricht (AKTSMS) abgefragt wird.

12. Verfahren nach einem der vorhergehenden Ansprüche, bei dem
nach Aktivieren des Leistungsmerkmals eine das Aktivieren des Leistungsmerkmals bestätigende Text- oder Multimedianachricht von der Verbindungssteuerung (VS) oder von der ersten Kommunikationsendeinrichtung (EG1) an die zweite Adressinformation (RUN02) übermittelt wird.

13. Verfahren nach einem der vorhergehenden Ansprüche, bei dem
durch das Aktivieren des Leistungsmerkmals ein Umschalten zwischen einem aktiven und einem inaktiven Zustand des Leistungsmerkmals bewirkt wird.

14. Kommunikationssystem zum Aktivieren eines Leistungsmerkmals einer ersten Kommunikationsendeinrichtung (EG1), **dadurch gekennzeichnet,**
**dass** Mittel zur Durchführung des Verfahrens gemäß einem der vorhergehenden Verfahrensansprüche vorgesehen sind.

## Claims

1. A method for activating a performance feature of a first communication transmission device (EG1), **characterized in that**
a. based on a text- or multimedia message (AKTSMS) entering a connection control (VS) in the first communications terminal (EG1) or associated with the first communications terminal (EG1) from a transmitter (EG2) designed as a communications terminal, from the entering text- or multimedia message (AKTSMS)
a first address information (RUN01)specifying the first communications terminal (EG1)is detected which corresponds to a target address (RUNOGW) for the text- or multimedia message (AKTSMS), wherein the first communications terminal (EG1) represents a receiver of the text- or multimedia message (AKTSMS)and the receiver of the text- or multimedia message (AKTSMS)is activated by addressing with the first address information (RUN01) which is used in signaling to and/or from the first communications terminal (EG1),
a second address information (RUN02) specifying the transmitter (EG2) of the text- or multimedia message (AKTSMS)is detected which is used in signalings to and/or from the transmitter (EG2),
b. an authentication of the transmitter (EG2) is carried out in that a check is made whether the detected, second address information (RUN02) for the detected first address information (RUN01) was stored in an assigned manner, and
c. as a consequence of a positive checking result the performance feature is activated.

2. The method according to Claim 1 in which a useful data text of the entering text- or multimedia message (AKTSMS)comprises a command syntax with given key words for activating or deactivating different performance features.

3. The method according to Claim 1 or 2 in which the text- or multimedia message (AKTSMS)is an SMS message whose target address is provided in an SMS gateway (SMSGW).

4. The method according to one of the previous claims in which the first(RUN01) and/or the second (RUN02) address information for the text- or multimedia message (AKTSMS) is/are detected in a message exchange (SMSGW), and that the activation of the performance feature is initiated in the first communications terminal (EG1) or in the connection control (VS) by the message exchange (SMSGW) based on the entering text- or multimedia message (AKTSMS).

5. The method according to one of the previous claims in which as a consequence of the positive checking result from useful data and/or signaling data of the entering text- or multimedia message (AKTSMS), control information for controlling the performance feature is detected.

6. The method according to one of the previous claims in which the connection control (VS) comprises a switching system (PBX), a CTI application (CTIA) and a gateway (SMSGW), wherein the gateway (SMSGW) comprises a coupling via a data connection line (DV) to the CTI application (CTIA) which is coupled via a CTI interface (CTIS) to the switching system (PBX).

7. The method according to one of the previous claims in which as a consequence of the positive checking result an acoustical and/or visual display for an entering text- or multimedia message (AKTSMS) is suppressed on the first communications terminal (EG1) by the first communications terminal (EG1) or by the connection control (VS).

8. The method according to one of the previous claims in which the performance feature is designed as
- an answering machine function of the first communications terminal (EG1),
- a teleworking function for the logical replacing of an internal communications terminal by an external communications terminal,
- an acoustical spatial monitoring by the first communications terminal (EG1),
- a basic initialization of the first communications terminal (EG1),
- a reporting or registering of the first communications terminal (EG1) in the connection control (VS), or as
- a call diversion.

9. The method according to Claim 8 in which
after activation of the call diversion a connection (RUF)addressed to the first communications terminal (EG1) is diverted, by addressing to the second address information (RUN02), to another communications terminal (EG2) specified by the second address information (RUN02).

10. The method according to Claim 8, in which as a consequence of the positive checking result a target call number transmitted by the text- or multimedia message (AKTSMS) for the call diversion is detected and the call diversion to this target call number is activated.

11. The method according to one of the previous claims in which the second address information (RUN02) is transmitted in the framework of the text- or multimedia message (AKTSMS)or in instances in which the second address information (RUN02) is not transmitted in the framework of the text- or multimedia message (AKTSMS), the second address information (RUN02) is queried in the transmitter (EG2) of the text- or multimedia message (AKTSMS).

12. The method according to one of the previous claims in which after activation of the performance feature a text- or multimedia message which actuates the activation of the performance feature is transmitted from the connection control (VS)or from the first communications terminal (EG1) to the second address information (RUN02).

13. The method according to one of the previous claims in which a switching between an active and an inactive state of the performance feature is brought about by the activation of the performance feature.

14. A communication system for activating a performance feature of a first communications terminal (EG1),
**characterized in that**
means are provided for carrying out the method according to one of the previous method claims.

## Revendications

1. Procédé servant à activer une caractéristique de puissance d'un premier terminal de communications (EG1),
**caractérisé en ce que**
a. du fait d'un message texte ou multimédia (AKTSMS) entrant dans le cas du premier terminal de communications (EG1) ou dans le cas d'une commande connexion (VS) associée au premier terminal de communications (EG1) provenant d'un expéditeur (EG2) réalisé sous la forme d'un appareil terminal de communications, est détectée à partir du message texte ou multimédia (AKTSMS) entrant
- une première information d'adresse (RUN01) spécifiant le premier terminal de communications (EG1), laquelle correspond à une adresse cible (RUNOGW) pour le message texte ou multimédia (AKTSMS), dans lequel le premier terminal de communications (EG1) constitue un destinataire du message texte ou multimédia (AKTSMS) et le destinataire du message texte ou multimédia (AKTSMS) est abordé par adressage avec la première information d'adresse (RUN01), qui est utilisée dans des signalisations vers et/ou depuis le premier terminal (EG1),
- une deuxième information d'adresse (RUN02) spécifiant l'expéditeur (EG2) du message texte ou multimédia (AKTSMS), laquelle est utilisée dans des signalisations vers et/ou depuis l'expéditeur (EG2),
b. une authentification de l'expéditeur (EG2) est effectuée, **en ce qu'**on vérifie si la deuxième information d'adresse (RUN02) détectée est mémorisée de manière associée pour la première information d'adresse (RUN01) détectée, et
c. suite à un résultat de contrôle positif, la caractéristique de puissance est activée.

2. Procédé selon la revendication 1, dans lequel un texte de données utiles du message texte ou multimédia (AKTSMS) comprend une syntaxe de commande comprenant des mots-clés spécifiés servant à l'activation ou à la désactivation de différentes caractéristiques de puissance.

3. Procédé selon la revendication 1 ou 2, dans lequel le message texte ou multimédia (AKTSMS) est un message SMS, dont l'adresse cible est prévue dans une passerelle SMS (SMSGW).

4. Procédé selon l'une quelconque des revendications précédentes, dans lequel
pour le message texte ou multimédia (AKTSMS), la première (RUN01) et/ou la deuxième (RUN02) information d'adresse sont détectées dans une centrale de messages (SMSGW), et que l'activation de la caractéristique de puissance est déclenchée dans le premier terminal de communications (EG1) ou dans la commande de connexion (VS) par la centrale de messages (SMSGW) du fait du message texte ou multimédia (AKTSMS) entrant.

5. Procédé selon l'une quelconque des revendications précédentes, dans lequel
suite au résultat de contrôle positif, une information de commande servant à commander la caractéristique de puissance est détectée à partir de données utiles et/ou de signalisation du message texte ou multimédia (AKTSMS) entrant.

6. Procédé selon l'une quelconque des revendications précédentes, dans lequel
la commande de connexion (VS) comprend une installation de communications (PBX), une application CTI (CTIA) et une passerelle (SMSGW), dans lequel la passerelle (SMSGW) présente un couplage avec l'application CTI (CTIA) par l'intermédiaire d'une ligne de connexion de données (DV), qui est accouplée à l'installation de communications (PBX) par l'intermédiaire d'une interface CTI (CTIS).

7. Procédé selon l'une quelconque des revendications précédentes, dans lequel
suite au résultat de contrôle positif, une indication acoustique et/ou visuelle pour un message texte ou multimédia (AKTSMS) entrant sur le premier terminal de communications (EG1) est supprimée par le premier terminal de communications (EG1) ou par la commande de connexion (VS).

8. Procédé selon l'une quelconque des revendications précédentes, dans lequel
la caractéristique de puissance est configurée sous la forme
- d'une fonction de réponse automatique du premier terminal de communications (EG1),
- d'une fonction de télétravail servant à remplacer de manière logique un terminal de communications interne à la société par un terminal de communications externe à la société,
- d'une surveillance de local acoustique par le premier terminal de communications (EG1),
- d'une initialisation de base du premier terminal de communications (EG1),
- d'une connexion ou d'un enregistrement du premier terminal de communications (EG1) dans le cas de la commande de connexion (VS),
ou sous la forme
- d'un renvoi d'appel.

9. Procédé selon la revendication 8, dans lequel
après l'activation du renvoi d'appel, une connexion (RUF) adressée au premier terminal de communications (EG1) est renvoyée, au moyen de l'adressage à la deuxième information d'adresse (RUN02), à un autre terminal de communications (EG2) spécifié par la deuxième information d'adresse (RUN02).

10. Procédé selon la revendication 8, dans lequel
suite au résultat de contrôle positif, un numéro d'appel cible transféré au moyen du message texte ou multimédia (AKTSMS) est détecté pour le renvoi d'appel et le renvoi d'appel vers ce numéro d'appel cible est activé.

11. Procédé selon l'une quelconque des revendications précédentes, dans lequel
la deuxième information d'adresse (RUN02) est transférée dans le cadre du message texte ou multimédia (AKTSMS) ou
si la deuxième information d'adresse (RUN02) n'est pas transférée dans le cadre du message texte ou multimédia (AKTSMS), la deuxième information d'adresse (RUN02) est demandée du côté de l'expéditeur (EG2) du message texte ou multimédia (AKTSMS).

12. Procédé selon l'une quelconque des revendications précédentes, dans lequel
après l'activation de la caractéristique de puissance, un message texte ou multimédia confirmant l'activation de la caractéristique de puissance est transféré par la commande de connexion (VS) ou par le premier terminal de communications (EG1) à la deuxième information d'adresse (RUN02).

13. Procédé selon l'une quelconque des revendications précédentes, dans lequel
par l'activation de la caractéristique de puissance, une commutation entre un état actif et un état inactif de la caractéristique de puissance est entraînée.

14. Système de communications servant à activer une caractéristique de puissance d'un premier terminal de communications (EG1),
**caractérisé en ce**
**que** sont prévus des moyens servant à mettre en oeuvre le procédé selon l'une quelconque des revendications précédentes.
